# NEUE EUROPÄISCHE PATENTSCHRIFT

(11) **EP 2 271 530 B2**
(45) Veröffentlichungstag und Bekanntmachung des Hinweises auf die Entscheidung über den Einspruch: **03.08.2022**
(45) Hinweis auf die Patenterteilung: 02.11.2016
(21) Anmeldenummer: 09734396.6
(22) Anmeldetag: 23.04.2009
(51) Int. Cl.: B60T 13/58, B60T 13/74

(54) **MEHRKREISIGE ELEKTROHYDRAULISCHE KRAFTFAHRZEUGBREMSANLAGE UND BETRIEBSVERFAHREN DAZU**
MULTIPLE-CIRCUIT ELECTRO-HYDRAULIC BRAKE SYSTEM FOR MOTOR VEHICLE AND OPERATING METHOD FOR SUCH A SYSTEM
SYSTÈME DE FREINAGE ÉLECTROHYDRAULIQUE À CIRCUITS MULTIPLES POUR VÉHICULE AUTOMOBILE ET MÉTHODE D'EXPLOITATION POUR UN TEL SYSTÈME

(30) Priorität: 24.04.2008 DE 102008020717; 07.04.2009 DE 102009016638
(43) Veröffentlichungstag der Anmeldung: 12.01.2011
(73) Patentinhaber: Continental Automotive Technologies GmbH, 30165 Hannover (DE)
(72) Erfinder: SCHNEIDER, Heinz-Anton, 65527 Niedernhausen (DE); SCHMITTNER, Bernhard, 60488 Frankfurt am Main (DE)
(74) Vertreter: Schlosser, Martin
(86) Internationale Anmeldenummer: PCT/EP2009/054901
(87) Internationale Veröffentlichungsnummer: WO 2009/130283

(56) Entgegenhaltungen:
- EP-A1- 1 049 611
- EP-A2- 1 767 806
- WO-A2-2004/108497
- WO-A2-2009/130283
- DE-A1- 10 010 735
- DE-A1- 10 213 904
- DE-A1- 10 347 189
- DE-A1- 10 349 970
- DE-A1- 19 632 863
- DE-A1- 19 933 962
- DE-A1-102004 004 992
- DE-A1-102005 042 282
- DE-A1-102009 016 638
- DE-B3- 10 302 681
- DE-C1- 19 732 168
- DE-C1- 19 834 129
- US-A1- 2005 127 749

## Beschreibung

Die Erfindung betrifft ein Verfahren für eine mehrkreisige elektrohydraulische Kraftfahrzeugbremsanlage umfassend mehrere Bremssättel mit hydraulisch betätigbaren Aktuatoren, die in mehreren hydraulischen Bremskreisen organisiert sind, und mit einem elektronisch gesteuerten Aggregat umfassend eine Elektronikeinheit und eine Hydraulikeinheit enthaltend ein Motor-Pumpen-Aggregat zur hydraulischen Energieversorgung, hydraulisch verbunden sind, und wobei die hydraulisch betätigbaren Aktuatoren entweder durch hydraulische Betätigungsmittel fahrerinitiiert betätigbar sind, und/oder durch die Hydraulikeinheit fahrerunabhängig insbesondere durch ein elektronisches Stabilitätsprogramm (ESC) betätigbar sind, und wobei wenigstens einige der Bremssättel, insbesondere zum Betätigen oder Lösen einer Feststellbremswirkung, zusätzlich oder gesondert elektromechanische Aktuatoren aufweisen, wobei wenigstens eine elektrische Stromquelle elektrisch mit der Elektronikeinheit verbunden ist, die der elektrischen Versorgung vom Motor-Pumpen-Aggregat dient.

Bei einem bereits in Serie gefertigten, vorbekannten, Bremssystem mit elektromechanischen Aktuatoren ist außer dem elektronischen Stabilitätsprogramm - und dem zugehörigen ESC-Steuergerät (ESC-ECU) - eine gesonderte EPB-Steuerelektronik (EPB-ECU) für die Versorgung und Regelung der elektromechanischen Aktuatoren vorgesehen. Die EPB-Steuerelektronik ist gesondert in einem Gehäuse an einem gesonderten Ort des Kraftfahrzeugs platziert. Jede der beiden Steuerelektroniken ist mit einer elektrischen Stromquelle verbunden. Zur Kommunikation dient ein Verbund einer Netzwerktopologie (üblicherweise ein CAN-Bussystem) in das die ESC-ECU eingebunden ist. Daneben bestehen mehrere elektrische Verbindungs- oder Versorgungsleitungen zwischen der EPB-Steuerelektronik und den elektromechanischen Aktuatoren. Zur fahrerinitiierten Betätigung dient eine Mensch-Maschine-Schnittstelle, die mit der EPB-ECU verbunden ist.

Die Funktion ist üblicherweise so, dass das EPB-Steuergerät einen Feststellbremsbetätigungswunsch einliest und die elektromechanischen Aktuatoren (EPB-Aktuatoren) - die üblicherweise als reversierbare elektrische Getriebemotoren ausgebildet sind - unabhängig voneinander in Abhängigkeit des Fahrerwunsches versorgt, also entweder im Sinne einer Feststellbremswirkung betätigt oder löst.

Das bekannte Bremssystem verursacht sowohl bei einem Bremssystemhersteller als auch bei einem Kraftfahrzeughersteller einen hohen Aufwand. Dies liegt insbesondere darin begründet, dass die gesonderte Hardware hergestellt, montiert und schließlich in einem Kraftfahrzeug installiert werden muss. Dies verursacht auch einen erheblichen Verkabelungsaufwand beim Fahrzeughersteller.

Die EP 1 767 806 A2 beschreibt eine hydraulische und elektromechanisch betätigbare Scheibenbremse wobei zur erleichterten elektromechanischen Betätigung ein besonderes Planetengetriebe vorgeschlagen wird. Relevant sind auch die Dokumente EP 1 049 611 B1 und DE 10 2004 004 992 A1.

Es ist eine Aufgabe der vorliegenden Erfindung, den Aufwand für eine elektromechanische Feststellbremsfunktion zu senken, und gleichzeitig eine zuverlässige Ansteuerung der elektromechanischen Aktuatoren zu ermöglichen.

Die Aufgabe wird erfindungsgemäß mit sämtlichen Merkmalen vom Patentanspruch 1 gelöst. Es ist vorgesehen, die gesonderte EPB-Elektronikeinheit dadurch zu rationalisieren, dass eine ohnehin vorhandene ESC-Elektronikeinheit über jeweils wenigstens zwei gesonderte elektrische Versorgungsleitungen mit den elektromechanischen Aktuatoren verbunden ist, und dass diese ESC-Elektronikeinheit wenigstens ein elektronisches Schaltmittel aufweist, um die elektromechanisch betätigbaren Akuatoren elektrisch zu versorgen. Durch die Erfindung wird der Gesamtaufwand zur Herstellung eines Bremssystems reduziert, und der Verkabelungsaufwand reduziert. Ein besonderer Vorteil der Erfindung wird insbesondere in Fällen erzielt, in denen die elektrische Stromquelle ein vergleichsweise niedrige Spannung zur Verfügung stellt, wobei die Rationalisierung eines gesonderten EPB-Steuergerätes zu den vorteilhaften Wirkungen beiträgt.

In Weiterbildung der Erfindung ist auch vorgesehen, elektromechanische Aktuatoren mit höchstem Wirkungsgrad einzusetzen, so dass auch diese vergleichsweise wenig Strom zur Erzielung der geforderten Spannkräfte anfordern.

Vorteilhafterweise wird es durch die verbesserte, erfindungsgemäße Kostenstruktur der Erfindung sogar ermöglicht, ein Bremssystem mit dem vorgeschlagenen Betriebsverfahren in der Kleinwagenklasse oder den Kraftfahrzeugen einer unteren Mittelklasse einzusetzen.

Weitere Einzelheiten der Erfindung gehen aus Unteransprüchen im Zusammenhang mit der Beschreibung anhand der Zeichnung hervor. In der Zeichnung zeigt jeweils stark schematisch:
Fig. 1 ein vorbekanntes Bremssystem,
Fig. 2 ein Bremssystem zur Durchführung eines erfindungsgemäßen Verfahrens, und
Fig. 3 Einzelheiten vom Bremssystems gemäß Fig. 2 zum Vergleich mit dem bekannten System nach Fig. 1.

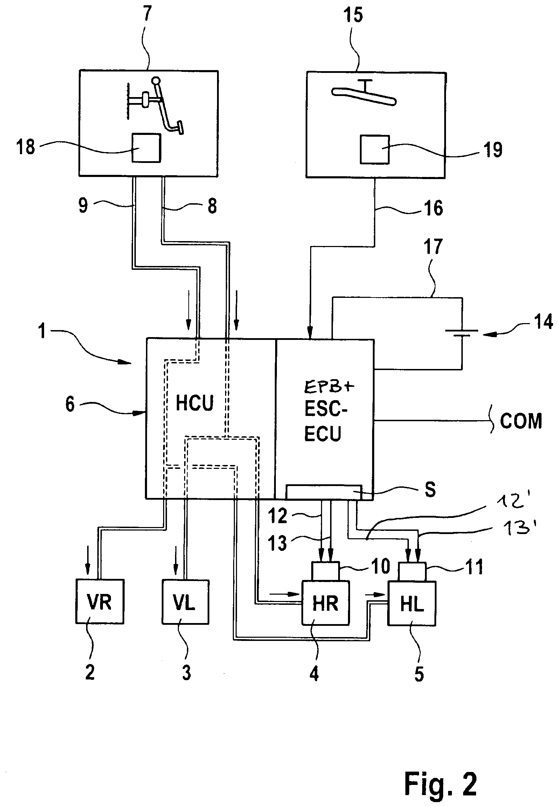

Aus der Fig. 2 geht eine mehrkreisige, elektrohydraulisch betätigbare Kraftfahrzeugbremsanlage 1 hervor. Diese umfasst mehrere Bremssättel 2-5 mit hydraulisch betätigbaren Aktuatoren, die in mehreren hydraulischen Bremskreisen organisiert sind, und mit einem elektronisch gesteuerten Aggregat 6 umfassend eine Elektronikeinheit (EPB+ESC-ECU) und eine Hydraulikeinheit (HCU) enthaltend ein Motor-Pumpen-Aggregat sowie elektrohydraulische Ventile zur hydraulischen Energieversorgung, hydraulisch verbunden sind. Dabei sind die hydraulisch betätigbaren Aktuatoren durch ein hydraulisches Betätigungsmittel 7 über durchgehende Hydraulikleitungen 8,9 fahrerinitiiert betätigbar, und das Aggregat 6 stellt in diesem Zusammenhang grundsätzlich eine elektronisch geregelte Bremsmomentenverteilung (EBD) für die Bremssättel 2-5 zur Verfügung. Eine weitere Funktion besteht darin, dass die Bremssättel 2-5 fahrerunabhängig durch das Aggregat 6, insbesondere durch ein elektronisches Stabilitätsprogramm (ESC), betätigbar sind. Um weitere elektronische Assistenzfunktion zu ermöglichen, weisen wenigstens einige der Bremssättel 2-5, insbesondere zum Betätigen oder Lösen einer Feststellbremswirkung auf Grundlage von einem Parkbremswunsch, zusätzlich oder gesondert elektromechanische Aktuatoren 10, 11 mit hohem Wirkungsgrad auf. Die elektromechanischen Aktuatoren 10,11 können im Zusammenhang mit einer Scheibenbremse vorgesehen sein, oder auf eine Trommelbremse einwirken, die jeweils bevorzugt an einer Hinterachse angeordnet sind. Auch bei anderweitigen Reib- oder Rastmechanismen, die zum Festsetzen von Fahrzeugrädern dienen, kann die Erfindung angewendet werden. Zur elektrischen Versorgung ist wenigstens eine elektrische Stromquelle 14 elektrisch mit der Elektronikeinheit ECU verbunden. Dieselbe Verbindung dient der grundsätzlichen elektrischen Versorgung vom Aggregat 6 sowie der daran angeschlossenen Verbraucher. Die Elektronikeinheit EPB+ESC-ECU ist über jeweils wenigstens zwei gesonderte elektrische Versorgungsleitungen 12,13 mit den elektromechanischen Aktuatoren 10,11 verbunden. Weiterhin verfügt die Elektronikeinheit EPB+ESC-ECU über wenigstens ein elektrisches Schaltmittel, um die elektromechanisch betätigbaren Akuatoren 10,11 elektrisch reversierbar zu versorgen. Es versteht sich, dass bei Verwendung von dreiphasigen Drehstromantrieben im Bereich der Aktuatoren 10,11 drei Versorgungsleitungen vorgesehen sein können, ohne den Kern der Erfindung zu verlassen.

Das genannte Schaltmittel kann zusätzlich integrierte Mittel zum Reversieren von wenigstens einem der elektromechanischen Aktuator 10,11 aufweisen, um eine betätigte Feststellbremsfunktion zu lösen. Die konkrete Ausgestaltung derartiger Reversiermittel kann unterschiedlich gestaltet sein. Bei Verwendung von einem Gleichstrom-Getriebemotor im Bereich der Aktuatoren 10,11 können relaisartig wirkende Halbleiterschalter zum einfachen Umpolen der Stromrichtung in den beiden Versorgungsleitungen 12,13 ausreichen. Insbesondere bei Verwendung von mehrphasigen, insbesondere bürstenlosen Gleichstrommotoren ist dagegen eine Integration von Schaltmitteln zu bevorzugen, die Halbleiterschaltmittel in einer sogenannten MOS-FET-H-Brückenschaltungsanordnung enthält, um den Mehrquadrantenbetrieb zu ermöglichen.

Zur Verbindung der Elektronikeinheit EPB+ESC-ECU mit deren Peripherie wie insbesondere den Aktuatoren 10,12 dient wenigstens eine zusätzliche elektrische Schnittstelle S, beispielsweise mit wenigstens einem zusätzlichen elektrischen Steckelement, zur elektrischen Verbindung mit den wenigstens zwei elektrischen Versorgungsleitungen 12,13;12',13'. Es ist ein Busanschluss COM zur Integration und Kommunikation der ESC+EPB-ECU innerhalb einer Fahrzeugnetzwerktopologie vorgesehen. Weiterere Anschlüsse oder Verbindungen von Betätigungssensoren 18,19, Raddrehsensoren, Drucksensoren oder ähnliches mehr sind nicht verdeutlich.

In weiterer bevorzugter Ausgestaltung der Erfindung sind eine Mensch-Maschine-Schnittstelle 15 in Gestalt von einem Schalter oder Taster und ein nicht explizit gezeichnetes ECU-seitig integriertes Schaltmittel in Relation zu den Aktuatoren 10,11 in Serie geschaltet. Zur elektrischen Anbindung dient eine elektrische Verbindungsleitung 16 zwischen Mensch-Maschine-Schnittstelle 15 und ECU.

Obwohl es aus der schematischen Fig.2 nicht detailliert in dieser Form hervorgeht, ist es bei einer vorteilhaften Gestaltung zur Minimierung von Leitungslängen und daraus resultierender elektrischer Leitungswiderstände vorteilhaft, wenn die Elektronikeinheit EPB+ESC-ECU und die Stromquelle 14 in einem gemeinsamen Einbauraum, wie insbesondere in einem Motorraum oder Kofferraum eines Kraftfahrzeugs, verhältnismäßig nahe beieinander angeordnet sind, so dass die Verbindung 17 verhältnismäßig kurz gehalten werden kann. Insgesamt betrachtet kann als grundsätzliche Richtlinie für die Bemessung sämtlicher elektrischer Leitungslängen des Systems dienen, dass ein Quotient aus der Länge einer längsten Versorgungsleitung 12,13 einerseits, und der Länge einer elektrischen Verbindung 17 zwischen elektrischer Stromquelle 14 und Elektronikeinheit EPB+ESC-ECU andererseits mindestens etwa 2 oder mehr beträgt. Besonders bevorzugt wird ein Quotient zwischen etwa 3 bis 10 angestrebt, wobei auch zur prinzipiellen Minderung elektrischer Widerstände prinzipiell eine geringe Einzeldrahtlänge angestrebt wird. Die Begriffe Leitungslänge oder Drahtlänge sind generell so definiert, dass darunter prinzipiell stromführende Bauteile wie insbesondere sogenannte Stromschienen oder auch sonstige feste Fahrzeug- oder Chassisbauteile mit einer Stromführungsfunktion für die Aktuatoren 10,11 zu verstehen sind.

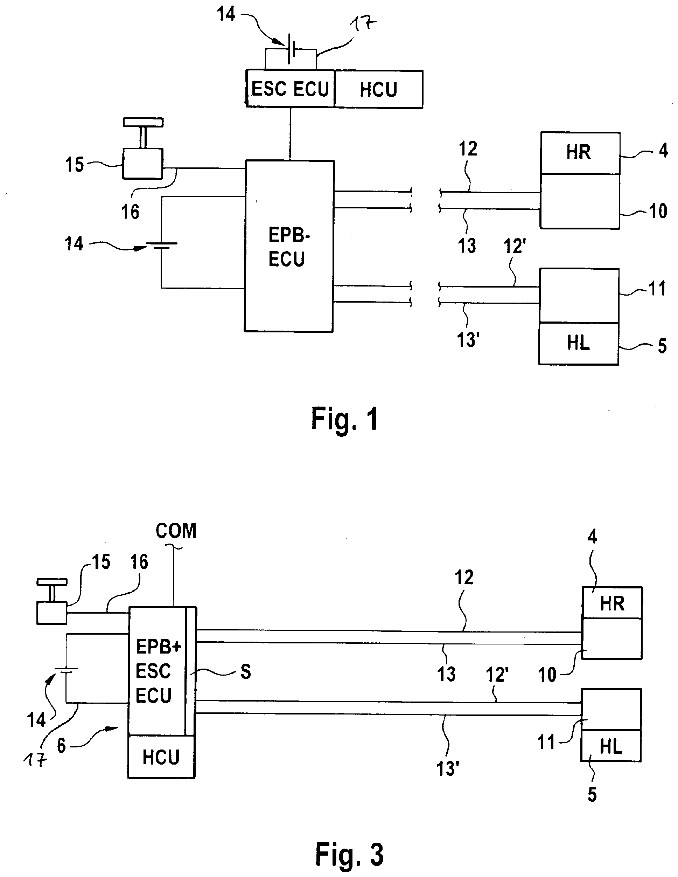

Aus den Figuren sind die Unterschiede in den Einzelheiten einer Bremsanlage gemäß Fig. 2,3 im Vergleich mit einer Bremsanlage nach Fig.1 ersichtlich.

Für den Betrieb des Bremssystems wird zusätzlich folgende Funktionalität vorgeschlagen. Erfindungsgemäß ist in der Elektronikeinheit EPB+ESC-ECU zumindest ein vorgegebener Stromsollwert hinterlegt ist, der mit einer vorgegebenen Zuspannkraft der elektromechanischen Aktuatoren 10,11 korreliert. Zusätzlich wird in der Elektronikeinheit EPB+ESC-ECU bei jeder Parkbremsbetätigung ein von einem elektromechanischen Aktuator 10,11 angeforderter, maximaler Iststrom gemessen oder ermittelt. In einem nachfolgenden Verfahrensschritt wird der maximale Iststrom mit dem vorgegebenen Stromsollwert verglichen, und auf diese Weise ein eventuelles Spannkraftdefizit ermittelt, falls der Iststrom geringer als der Stromsollwert ausfällt. Auf dieser Grundlage wird in der ECU eine Entscheidung gefällt, ob und in welchem Umfang eine zusätzliche elektrohydraulische Energieversorgung durch das Aggregat 6 vollzogen wird.

Die gebildetet Differenz zwischen Stromsollwert und maximalem Iststromwert kann gewissermaßen als Kennwert zur Quantifizierung einer Spannkraftdifferenz verwendet werden, um in Abhängigkeit von dieser Information eine graduell abgestufte oder geregelte Inbetriebnahme des Aggregates 6 zu ermöglichen. Dadurch wird es ermöglicht, das Aggregat 6 in Abhängigkeit von dem Kennwert nach Bedarf in Betrieb zu nehmen. In weiterhin bevorzugter Gestaltung dieser Funktion kann es vorgesehen sein, dass das Spannkraftdefizit durch Leistungsregelung von dem Aggregat 6 und / oder durch Druckregelung unter Verwendung von elektronisch regelbarer elekrohydraulischer Ventile erfolgt, die den hydraulischen Aktuatoren 2-5 zugeordnet sind.

Ein Lösevorgang der Feststellbremsfunktion erfolgt generell ohne Aktivierung des Motor-Pumpen-Aggregats 6 also durch reversierte Betätigung vom elektromechanischen Aktuator.

### Bezugszeichenliste

- 1: Kraftfahrzeugbremsanlage
- 2: Bremssattel
- 3: Bremssattel
- 4: Bremssattel
- 5: Bremssattel
- 6: Aggregat
- 7: hydraulische Betätigungsmittel
- 8: Hydraulikleitung
- 9: Hydraulikleitung
- 10: elektromechanischer Aktuator
- 11: elektromechanischer Aktuator
- 12: Versorgungsleitung
- 13: Versorgungsleitung
- 14: Stromquelle
- 15: Mensch-Maschine-Schnittstelle
- 16: Verbindungsleitung
- 17: Verbindung
- 18, 19: Sensor

- ECU: Elektronikeinheit
- HCU: Hydraulikeinheit
- S: Schnittstelle
- VR: Vorn Rechts
- VL: Vorn Links
- HR: Hinten Rechts
- HL: Hinten Links
- COM: Busanschluss
- ESC: Elektronisches Stabilitätsprogramm
- EPB: Elektrische Parkbremse

## Patentansprüche

1. Betriebsverfahren für eine Fahrzeugbremsanlage, nämlich eine mehrkreisige elektrohydraulische Kraftfahrzeugbremsanlage umfassend mehrere Bremssättel (2-5) mit hydraulisch betätigbaren Aktuatoren, die in mehreren hydraulischen Bremskreisen organisiert sind, und mit einem elektronisch gesteuerten Aggregat (6) umfassend eine Elektronikeinheit (EPB+ESC-ECU) und eine Hydraulikeinheit (HCU) aufweisend ein Motor-Pumpen-Aggregat zur hydraulischen Energieversorgung, hydraulisch verbunden sind, und wobei die hydraulisch betätigbaren Aktuatoren durch hydraulische Betätigungsmittel (7) fahrerinitiiert betätigbar sind, und/oder durch das Aggregat (6) fahrerunabhängig betätigbar sind, und wobei wenigstens einige der Bremssättel (2-5), insbesondere zum Betätigen oder Lösen einer Feststellbremswirkung, zusätzlich oder gesondert elektromechanische Aktuatoren (10,11) aufweisen, wobei wenigstens eine elektrische Stromquelle (14) elektrisch mit der Elektronikeinheit (EPB+ESC-ECU) verbunden ist, die der elektrischen Versorgung vom Aggregat (6) dient, und wobei die Elektronikeinheit (EPB+ESC-ECU) über jeweils wenigstens zwei gesonderte elektrische Versorgungsleitungen (12, 13) mit den elektromechanischen Aktuatoren (10,11) verbunden ist, und die Elektronikeinheit (ECU) wenigstens ein elektrisches Schaltmittel aufweist, um die elektromechanisch betätigbaren Akuatoren (10,11) elektrisch zu versorgen; **dadurch gekennzeichnet, dass** in der Elektronikeinheit (EPB+ESC-ECU) zumindest ein vorgegebener Stromsollwert hinterlegt ist, der mit einer vorgegebenen Zuspannkraft korreliert, dass in der Elektronikeinheit (EPB+ESC-ECU) für jede Parkbremsbetätigung ein von einem elektromechanischen Aktuator (10,11) angeforderter maximaler Iststrom gemessen oder ermittelt wird, dass der maximale Iststrom mit dem vorgegebenen Stromsollwert verglichen wird, um ein Spannkraftdefizit zu ermitteln, und dass das Aggregat (6) für eine zusätzliche hydraulische Energieversorgung durch die Elektronikeinheit (EPB+ESC-ECU) zusätzlich in Betrieb genommen wird, wenn ein Spannkraftdefizit ermittelt wurde.

2. Betriebsverfahren nach Anspruch 1, **dadurch gekennzeichnet, dass** das elektrische Schaltmittel zusätzlich wenigstens ein integriertes Mittel zum Reversieren von den elektromechanischen Aktuatoren (10,11) aufweist, um eine Feststellbremsfunktion zu lösen.

3. Betriebsverfahren nach Anspruch 1, **dadurch gekennzeichnet, dass** jedes Schaltmittel in der Elektronikeinheit (EPB+ESC-ECU) integriert vorgesehen ist, und wenigstens einen Halbleiterschalter und/oder eine MOSFET-Brückenschaltung enthält.

4. Betriebsverfahren nach Anspruch 1, **dadurch gekennzeichnet, dass** die Elektronikeinheit (EPB+ESC-ECU) wenigstens eine zusätzliche elektrische Schnittstelle (S), wie insbesondere wenigstens ein zusätzliches elektrisches Steckelement, zur elektrischen Verbindung mit den elektrischen Versorgungsleitungen (12,13) aufweist.

5. Betriebsverfahren nach Anspruch 1, **dadurch gekennzeichnet, dass** die Elektronikeinheit (EPB+ESC-ECU) eine zusätzliche Schnittstelle zu einer Mensch-Maschine-Schnittstelle (15), insbesondere zu einem gesonderten Schalter und/oder Taster, zum Betätigen oder Lösen einer Feststellbremswirkung aufweist, so dass Mensch-Maschine-Schnittstelle (15) und Schaltmittel in Serie geschaltet sind.

6. Betriebsverfahren nach Anspruch 1, **dadurch gekennzeichnet, dass** die Elektronikeinheit (EPB+ESC-ECU) und die Stromquelle (14) gemeinsam in einem gemeinsamen Einbauraum, wie insbesondere in einem Motorraum oder Kofferraum eines Kraftfahrzeugs, angeordnet sind.

7. Betriebsverfahren nach Anspruch 1, **dadurch gekennzeichnet, dass** ein Quotient aus der Länge einer längsten Versorgungsleitung (12,13) einerseits und der Länge einer elektrischen Verbindung (17) zwischen elektrischer Stromquelle (14) und Elektronikeinheit (EPB+ESC-ECU) andererseits mindestens etwa 2 oder mehr beträgt.

8. Betriebsverfahren nach Anspruch 7, **dadurch gekennzeichnet, dass** der Quotient zwischen etwas 3 bis 10 beträgt.

9. Betriebsverfahren für eine Fahrzeugbremsanlage nach Anspruch 1, **dadurch gekennzeichnet, dass** in der Elektronikeinheit (EPB+ESC-ECU) eine Differenz zwischen dem vorgegebenen Stromsollwert und dem maximalen Iststromwert gebildet wird, dass die Differenz als Kennwert zur Quantifizierung von einem Spannkraftdefizit vorgesehen ist, und dass das Aggregat (6) in Abhängigkeit von dem Kennwert nach Bedarf in Betrieb genommen wird.

10. Betriebsverfahren für eine Fahrzeugbremsanlage nach Anspruch 1 oder 9, **dadurch gekennzeichnet, dass** das Spannkraftdefizit durch Leistungsregelung von dem Aggregat (6) und / oder durch Druckregelung unter Verwendung elektronisch regelbarer elekrohydraulischer Ventile des Aggregats (6) abgebaut wird.

11. Betriebsverfahren für eine Fahrzeugbremsanlage nach einem der Ansprüche 1, 9 oder 10, **dadurch gekennzeichnet, dass** ein Lösevorgang nach einer Feststellbremsfunktion, ohne hydraulische Energieversorgung durch das Aggregat (6), durch reversierte Betätigung vom elektromechanischen Aktuator (10,11) erfolgt.

## Claims

1. Method of operation for a vehicle brake system, namely a multicircuit electrohydraulic motor vehicle brake system comprising a plurality of brake calipers (2-5) with hydraulically operatable actuators which are organized in a plurality of hydraulic brake circuits and are hydraulically connected to an electronically controlled unit (6) comprising an electronics unit (EPB+ESC-ECU) and a hydraulics unit (HCU) having a motor pump unit for the hydraulic supply of power, and wherein the hydraulically operatable actuators can be operated by hydraulic operating means (7) under the initiation of a driver, and/or can be operated by the unit (6) independently of the driver, and wherein at least some of the brake calipers (2-5), particularly for the purposes of operating or releasing a parking brake effect, additionally or separately have electromechanical actuators (10, 11), wherein at least one electrical current source (14) is electrically connected to the electronics unit (EPB+ESC-ECU), which is used for supplying electricity to the unit (6), and wherein the electronics unit (EPB+ESC-ECU) is connected to the electromechanical actuators (10, 11) by means of at least two respective separate electrical supply lines (12, 13), and the electronics unit (ECU) has at least one electrical switching means in order to supply electricity to the electromechanically operatable actuators (10, 11); **characterized in that** the electronics unit (EPB+ESC-ECU) stores at least one prescribed target current value which correlates to a prescribed tightening force, **in that** the electronics unit (EPB+ESC-ECU) is used to measure or ascertain a maximum actual current, demanded by an electromechanical actuator (10, 11), whenever the parking brake is operated, **in that** the maximum actual current is compared with the prescribed target current value in order to ascertain a tensioning force deficit, and **in that** the unit (6) for an additional hydraulic supply of power is additionally started up by the electronics unit (EPB+ESC-ECU) when a tensioning force deficit has been ascertained.

2. Method of operation according to Claim 1, **characterized in that** the electrical switching means additionally has at least one integrated means for reversing the electromechanical actuators (10, 11) in order to release a parking brake function.

3. Method of operation according to Claim 1, **characterized in that** each switching means is provided in a form integrated in the electronics unit (EPB+ESC-ECU) and contains at least one semiconductor switch and/or a MOSFET bridge circuit.

4. Method of operation according to Claim 1, **characterized in that** the electronics unit (EPB+ESC-ECU) has at least one additional electrical interface (S), such as particularly at least one additional electrical plug-in element, for the electrical connection to the electrical supply lines (12, 13).

5. Method of operation according to Claim 1, **characterized in that** the electronics unit (EPB+ESC-ECU) has an additional interface to a man-machine interface (15), particularly to a separate switch and/or pushbutton switch, for operating or releasing a parking brake effect, so that the man-machine interface (15) and the switching means are connected in series.

6. Method of operation according to Claim 1, **characterized in that** the electronics unit (EPB+ESC-ECU) and the current source (14) are arranged together in a common installation space, such as particularly in an engine compartment or trunk of a motor vehicle.

7. Method of operation according to Claim 1, **characterized in that** a quotient for the length of a longest supply line (12, 13), on the one hand, and the length of an electrical connection (17) between the electrical current source (14) and the electronics unit (EPB+ESC-ECU), on the other hand, is at least approximately two or more.

8. Method of operation according to Claim 7, **characterized in that** the quotient is between approximately 3 and 10.

9. Method of operation for a vehicle brake system according to Claim 1, **characterized in that** the electronics unit (EPB+ESC-ECU) is used to form a difference between the prescribed target current value and the maximum actual current value, **in that** the difference is provided as a parameter for quantizing a tensioning force deficit, and **in that** the unit (6) is started up on the basis of the parameter as required.

10. Method of operation for a vehicle brake system according to Claim 1 or 9, **characterized in that** the tensioning force deficit is reduced by output control by the unit (6) and/or by pressure regulation using electronically controllable electrohydraulic valves in the unit (6).

11. Method of operation for a vehicle brake system according to one of Claims 1, 9 or 10, **characterized in that** a release operation after a parking brake function, without hydraulic supply of power by the unit (6), is effected by means of reversed operation of the electromechanical actuator (10, 11).

## Revendications

1. Procédé de mise en fonctionnement destiné à un système de freinage pour véhicule automobile, et ce un système de freinage électrohydraulique à circuits multiples pour véhicule automobile comprenant une pluralité d'étriers de freins (2-5) ayant des actionneurs pouvant être actionnés de manière hydraulique, qui sont organisés en une pluralité de circuits de freinage hydrauliques et sont reliés de manière hydraulique à un groupe commandé électroniquement (6) comprenant une unité électronique (EPD+ESC-ECU) et une unité hydraulique (HCU) comportant un groupe moteur-pompe pour l'alimentation en énergie hydraulique, et dans lequel les actionneurs pouvant être actionnés de manière hydraulique peuvent être actionnés de manière déclenchée par le conducteur par des moyens d'actionnement hydrauliques (7) et/ou peuvent être actionnés de manière indépendante du conducteur par le groupe (6), et dans lesquels au moins certains des étriers de freins (2-5) comportent en outre ou au lieu de cela des actionneurs électromécaniques (10, 11), notamment pour actionner ou déclencher une action de freinage de stationnement, dans lequel au moins une source de courant électrique (14) est électriquement reliée à l'unité électronique (EPB+ESC-ECU), laquelle source de courant est utilisée pour alimenter électriquement le groupe (6), et dans lequel l'unité électronique (EPB+ESC-ECU) est reliée aux actionneurs électromécaniques (10, 11) par l'intermédiaire d'au moins deux lignes d'alimentation électriques séparées (12, 13) respectives, et l'unité électronique (ECU) comporte au moins un moyen de commutation électrique destiné à alimenter électriquement les actionneurs (10, 11) pouvant être actionnés de manière électromécanique, **caractérisé en ce qu'**au moins une valeur de courant prédéterminée est stockée dans l'unité électronique (EPB+ESC-ECU), celle-ci étant corrélée à une force de serrage prédéterminée, **en ce que**, pour chaque actionnement de freinage de stationnement, un courant réel maximal demandé à un actionneur électromécanique (10, 11) est mesuré ou déterminé dans l'unité électronique (EPB+ESC-ECU), **en ce que** le courant réel maximal est comparé à la valeur théorique de courant prédéterminée afin de déterminer un déficit de force de serrage, et **en ce que** le groupe (6) est en outre mis en fonctionnement pour une alimentation en énergie hydraulique supplémentaire par l'unité électronique (EPB+ESC-ECU) lorsqu'un déficit de force de serrage a été déterminé.

2. Procédé de mise en fonctionnement selon la revendication 1, **caractérisé en ce que** le moyen de commutation électrique comporte en outre au moins un moyen intégré pour inverser les actionneurs électromécaniques (10, 11) afin de déclencher une fonction de freinage de stationnement.

3. Procédé de mise en fonctionnement selon la revendication 1, **caractérisé en ce que** chaque moyen de commutation électrique est prévu de manière intégrée à l'unité électronique (EPB+ESC-ECU) et **en ce qu'**il comporte au moins un commutateur à semi-conducteur et/ou un circuit en pont MOSFET.

4. Procédé de mise en fonctionnement selon la revendication 1, **caractérisé en ce que** l'unité électronique (EPB+ESC-ECU) comporte au moins une interface électrique (S) supplémentaire, comme par exemple au moins un élément de connecteur électrique supplémentaire pour la connexion électrique aux lignes d'alimentation électriques (12, 13).

5. Procédé de mise en fonctionnement selon la revendication 1, **caractérisé en ce que** l'unité électronique (EPB+ESC-ECU) comporte une interface supplémentaire avec une interface homme-machine (15), notamment avec un commutateur et/ou un clavier séparés, pour actionner ou déclencher une action de freinage de stationnement de manière à ce que l'interface homme-machine (15) et le moyen de commutation soient connectés en série.

6. Procédé de mise en fonctionnement selon la revendication 1, **caractérisé en ce que** l'unité électronique (EPB+ESC-ECU) et la source de courant (14) sont disposées en commun dans un logement commun, comme en particulier un logement de moteur ou un coffre d'un véhicule automobile.

7. Procédé de mise en fonctionnement selon la revendication 1, **caractérisé en ce qu'**un quotient de la longueur d'une ligne d'alimentation la plus longue (12, 13) d'une part à la longueur d'une liaison électrique (17) entre la source de courant électrique (14) et l'unité électronique (EPB+ESC-ECU) d'autre part est au moins égal à environ 2 ou plus.

8. Procédé de mise en fonctionnement selon la revendication 7, **caractérisé en ce que** le quotient est compris entre environ 3 et 10.

9. Procédé de mise en fonctionnement d'un système de freinage pour véhicule automobile selon la revendication 1, **caractérisé en ce qu'**une différence entre la valeur de consigne de courant prédéterminée et la valeur de courant réelle maximale est établie dans l'unité électronique (EPB+ESC-ECU), **en ce que** la différence est définie en tant que valeur caractéristique permettant de quantifier un déficit de force de serrage, et **en ce que** le groupe (6) est mis en fonctionnement selon les nécessités en fonction de la valeur caractéristique.

10. Procédé de mise en fonctionnement d'un système de freinage pour véhicule automobile selon la revendication 1 ou 9, **caractérisé en ce que** le déficit de force de serrage est établi par le groupe (6) et/ou par une régulation de pression au moyen de soupapes hydrauliques du groupe (6) pouvant être régulées de manière électronique.

11. Procédé de mise en fonctionnement d'un système de freinage pour véhicule automobile selon l'une quelconque des revendications 1, 9 ou 10, **caractérisé en ce qu'**un processus de déclenchement est effectué conformément à une fonction de freinage de stationnement sans alimentation en énergie hydraulique par le groupe (6), au moyen d'un actionnement inversé de l'actionneur électromécanique (10, 11).
